# EUROPEAN PATENT SPECIFICATION

(11) **EP 4 205 551 B1**
(45) Date of publication and mention of the grant of the patent: **20.11.2024**
(21) Application number: 22216884.1
(22) Date of filing: 28.12.2022
(51) Int. Cl.: A23G 3/34, A21D 13/066, A21D 13/32, A21D 13/50, A23G 3/50, A23G 3/54, A23G 3/48

(54) **METHOD FOR PRODUCING A FILLING FOR MACARONS AND THE MACARONS OBTAINED**
VERFAHREN ZUR HERSTELLUNG VON FÜLLUNGEN FÜR MAKARONS UND ALSO ERHALTENE MAKARONS
PROCÉDÉ POUR LA FABRICATION DE FOURRAGE POUR MACARONS ET MACARONS AINSI OBTENUS

(30) Priority: 29.12.2021 BE 202106095; 29.12.2021 BE 202106096
(43) Date of publication of application: 05.07.2023
(73) Proprietor: Poppies Bakeries d'Haubry BV, 8980 Zonnebeke (BE)
(72) Inventor: DESMET, Philippe, 8980 Zonnebeke (BE); VANDOORNE, Geert, 8980 Zonnebeke (BE)
(74) Representative: Brantsandpatents bv

(56) References cited:
- WO-A2-2020/036551
- BE-A4- 1 019 391
- DE-U1- 202008 016 239
- GB-A- 2 037 564
- JP-A- 2001 178 354
- JP-B2- 4 331 013
- KR-A- 20200 021 369
- KR-B1- 101 855 153
- US-A- 5 958 503
- US-A1- 2003 175 385
- US-A1- 2014 295 034
- DATABASE FSTA [online] INTERNATIONAL FOOD INFORMATION SERVICE (IFIS), FRANkFURT-MAIN, DE; 1 January 2008 (2008-01-01), ANONYMOUS: "Marzipan type fillings - a product comparison. (translated)", XP002806977, Database accession no. FS-2008-12-Mq3209
- BROT + BACKWARE, vol. 57, no. 3, 1 January 2008 (2008-01-01), BROT + BACKWAREN 2008, pages 30, XP009537057

## Description

### TECHNICAL FIELD

The invention relates to a method for producing a filling for macarons and the macarons obtained.

### PRIOR ART

Macarons are small round airy and crispy dough cookies that adhere to each other by means of a soft filling. In addition to the properties of the dough cookies, also called shells, the properties of the filling are also extremely important to obtain a successful macaron. Not only the taste of the filling is important, but also the consistency of the filling. If the filling contains too much moisture, it will be too liquid and will run out between the shells. In addition, water will always migrate to the highest concentration of solutes in order to achieve equilibrium. As a result, when the filling is placed between the shells, moisture from the filling will migrate to the shells and increase the moisture content of the latter. However, a filling that is too liquid will increase the moisture content of the shells too much, causing the shells to lose their crispness. Conversely, if the filling contains too little moisture, not enough water will migrate to the shells, causing them to dry out too much and harden.

In the industrial production of macarons on a large scale, it is also important to increase the minimum shelf life of the macarons as much as possible. This simplifies the logistical processes related to the production, transport and sale of the macarons. The minimum shelf life depends, among other things, on the ingredients used and the moisture content of the macaron. Ganache fillings for macarons, for example, are often based on cream (KR20200021369A, KR101855153B1) which limits the shelf life of the macarons or based on vegetable oil (WO2020036551A2) which adversely affects the consistency of the filling.

It is therefore essential to manufacture a filling that contains the appropriate moisture content in addition to the desired ingredients.

The present invention aims to find a solution for at least some of the above problems.

### SUMMARY OF THE INVENTION

The invention relates to a method for producing a filling for macarons. More particularly, the invention relates to a method according to claim 1, the filling comprising at least a sugar, water, glucose syrup and a fat, wherein in a first step the sugar, water and glucose syrup are mixed into a syrup mixture, characterized in that the amount of water is adjusted to produce a filling with an average moisture content of 20-35% (m/m) and an average water activity of 0.75 to 1 for a ganache filling or with an average moisture content of 15-30% (m/m) and an average water activity of 0.65 to 0.80 for a marzipan filling. Preferred embodiments of the method are presented in claims 2 to 6.

By adjusting the amount of water to obtain a filling with such a moisture content and such water activity, a filling with an optimal flow is obtained, so that it can be easily applied between the shells of a macaron. Moreover, this filling will show an optimal migration pattern when placed between the shells of a macaron.

In a second aspect, the invention relates to a macaron composed of two shells and the aforementioned filling. More particularly, the invention relates to a macaron according to claim 7, each shell being characterized by a flat bottom and a convex top, the shells in the macaron being positioned such that the flat bottom of a first shell is proximal to the flat bottom of a second shell, the filling being placed between and contacting the flat bottoms of the two shells, wherein, after migration of moisture from the filling, the moisture content and the average water activity of the shells and the filling in the macaron are in equilibrium and migration no longer occurs, the average water activity of the macaron in equilibrium being between 0.65 and 0.80 when the filling is a ganache filling or between 0.60 and 0.75 when the filling is a marzipan filling. Preferred embodiments of the macaron are presented in claims 8 to 15.

### DETAILED DESCRIPTION

The invention relates to a method for producing a filling for macarons and the obtained macarons.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for producing a filling for macarons, the filling comprising at least a sugar, water, glucose syrup and a fat, wherein in a first step the sugar, water and glucose syrup are mixed into a syrup mixture, characterized in that the amount of water is adjusted to produce a filling with an average moisture content of 20-35% (m/m) and an average water activity of 0.75 to 1 for a ganache filling or with an average moisture content of 15-30% (m/m) and an average water activity of 0.65 to 0.80 for a marzipan filling.

The moisture content of a product comprises all the water that is present in the product. This comprises both free and bound water and is expressed as a percentage of the total weight of the product. The moisture content is preferably measured using a moisture meter based on the loss on drying method, wherein the moisture meter comprises a weighing unit and a halogen heating element.

The water activity is a measure of the amount of free water present in a product. The a_{w} value is determined when the relative humidity around a product is stable. The a_{w} value is a dimensionless unit. The a_{w} spectrum runs from 0 to 1. An a_{w} value of 0 indicates that there is no free water in the product. For pure water, an a_{w} value of 1 is the result.

An a_{w} meter is preferably used to measure the a_{w} value. This meter contains a chamber that can be completely closed off. The sample is placed in the chamber and sealed. The a_{w} meter uses a chilled-mirror dew-point technique to measure the water activity of a sample. The sample is equilibrated with a sealed chamber containing a mirror where condensation on the mirror can be detected. At equilibrium, the relative humidity of the air in the chamber is equal to the water activity of the sample. The temperature of the mirror is precisely controlled by a thermoelectric (Peltier) cooler. Detection of the exact point where condensation first appears on the mirror is done with a photoelectric cell. A beam of light is directed at the mirror and reflected into a photodetector cell. The photodetector detects the change in reflection coefficient when condensation occurs on the mirror. The dew point sensor measures the dew point temperature of the air in the sealed chamber, and the infrared thermometer measures the temperature of the sample. From these measurements, the relative humidity of the headspace is calculated as the ratio of the dew point temperature to the saturation vapor pressure at the sample temperature. When the water activity of the sample and the relative humidity of the air are in equilibrium, measurement of the headspace humidity gives the water activity of the sample.

By adjusting the amount of water to obtain a filling with such a moisture content and such water activity, a filling with an optimal flow is obtained. This makes the filling easy to use and can be easily placed between the shells of a macaron. Too high a flow would result in a filling running out between the shells, too low a flow would make it more difficult to apply between the shells. Moreover, this filling will show an optimal migration pattern when placed between the shells of a macaron.

The other ingredients and their quantities further determine the moisture content and water activity of the filling.

In an embodiment, the method according to the present invention concerns a method for producing a marzipan filling for macarons, the marzipan filling comprising at least a sugar, water, glucose syrup, a fat and marzipan, wherein the sugar, water and glucose syrup are mixed into a syrup mixture at an average temperature between 20°C and 40°C, wherein the fat is then added and the whole is mixed to an intermediate mixture, marzipan being subsequently added to the intermediate mixture and wherein the amount of water is adjusted to obtain a filling with an average moisture content of 15-30% (m/m) and an average water activity of 0.65 to 0.8.

Marzipan fillings are for instance known from BE1019391, GB2037564, DE202008016239 and from the article "Marzipan type fillings-a product comparison" (International food information service (IFIS), Frankfurt-Main, DE; 1 January 2008). These documents however do not describe the method of the current invention.

In a preferred embodiment, the syrup mixture comprises a maximum of 50% m/m of the total weight of the marzipan filling. Because of its hygroscopic nature, the syrup mixture makes it possible to bind water and thus prepare a marzipan filling with such a water activity. The syrup mixture is also used as a sweetener and therefore strongly determines the organoleptic properties of the filling. In a preferred embodiment, the syrup mixture comprises a maximum of 50% m/m sugar. Preferably sucrose is used as sugar. In a preferred embodiment, the syrup mixture comprises up to 50% glucose syrup.

By mixing the sugar, the water and the glucose syrup into a syrup mixture at an average temperature between 20°C and 40°C and a speed preferably between 1300 and 1700 revolutions/min (rev/min), the sugar present is dissolved sufficiently quickly in the syrup mixture. The temperature of the syrup mixture is also crucial for determining the final temperature of the final marzipan filling. This is in fact preferably between 30°C and 33°C and is preferably 31.5°C. In a preferred embodiment, the viscosity of the syrup mixture is between 500 cps and 140,000 cps, measured at 20°C, preferably with a Brookfield Digital Viscometer (spindle N3) and the syrup mixture preferably has a solid content of 70% m/m on average.

In a next step, the fat is added and the whole is mixed into an intermediate mixture. In a preferred embodiment, the fat is a vegetable fat. In a preferred embodiment, the fat comprises a maximum of 35% m/m of the total weight of the marzipan filling.

In a preferred embodiment, additional ingredients are added to the intermediate mixture, wherein the additional ingredients and the intermediate mixture are mixed for 1 to 3 minutes, preferably less than two minutes, such as 110 seconds, at a speed comprised between 1300 and 1700 revolutions/minute (rev/min), preferably 1500 rev/min, before marzipan is added. Such a duration and speed make it possible to optimally mix the intermediate mixture and the additional ingredients, while optimizing energy consumption.

In a preferred embodiment, the additional ingredients are selected, inter alia, from chocolate galets, dyes and/or coloring foodstuffs, extracts and/or aromas. These additional ingredients offer the advantage that a specific taste and color can be obtained. In this way, the consumer can choose from different options according to their personal preference. In a preferred embodiment, the additional ingredients are also selected from, inter alia, preservatives and/or acidity regulators, which extend the shelf life of the filling. The acidity is important for the taste of a product and plays a role in preventing spoilage. Food acids can only make a product more acidic, while acidity regulators can also make it less acidic. In an embodiment, the additional ingredients comprise substances that optimize the physical properties of the filling, such as an emulsifier or glycerin.

Marzipan is added in a next step. In a preferred embodiment, the marzipan comprises at least 35% m/m of the total weight of the marzipan filling. A dairy-based filling (e.g. cream) is often used in the production of a macaron. However, such fillings based on dairy products have a shorter shelf life than a filling based on marzipan. The use of a marzipan-based filling makes it possible to keep the macaron at room temperature for a longer period of time.

Preferably, the addition of marzipan takes place at an average temperature between 28°C and 35°C and, after addition of marzipan, the mixture is mixed for 1.5 to 4 minutes, preferably less than two minutes, such as 110 seconds, at a speed between 1300 and 1700 revolutions/minute (rev/min), preferably 1500 rev/min. Mixing the marzipan at such a temperature range, speed and duration ensures that the marzipan is sufficiently malleable and makes it possible to mix it optimally, while optimizing energy consumption. In addition, this step is important for determining the final temperature of the final marzipan filling. This is in fact preferably between 30°C and 33°C and is preferably 31.5°C. By shortening or extending this step by a few seconds, the temperature of the final marzipan filling can be slightly adjusted. By lengthening or shortening this step, the friction of the knife of the mixing installation creates a slightly higher or lower temperature, depending on the lengthening or shortening of the time.

In a preferred embodiment, after the addition of marzipan, concentrates, pastes and/or chocolates are added and the whole is then mixed for 10 to 20 seconds at a speed between 1300 and 1700 revolutions/minute (rev/min), preferably 1500 revolutions/min at a temperature between 30°C and 33°C. In a preferred embodiment, these last ingredients comprise a maximum of 10% m/m of the total weight of the marzipan filling. Such a mixing step is sufficient to mix these last ingredients.

The different mixing steps take place in a suitable mixing installation known in the art. In a preferred embodiment, this mixing installation is in a slightly tilted position in order to obtain an optimum mixing.

In another embodiment, the method according to the present invention concerns a method for producing a ganache filling for macarons, wherein in a first step the sugar, water and glucose syrup are mixed into a syrup mixture at an average temperature between 40°C and 75°C and in which the fat is added and mixed in a final step and wherein the amount of water is adjusted to obtain a ganache filling with an average moisture content of 20-35% (m/m) and an average water activity of 0.75 to 1.

US5958503, US20030175385, US20140295034, JP4331013 and JP2001178354 describe methods for preparing a ganache filling. These documents do not describe between which range the optimal water activity of the ganache filling should be, nor do they describe the method of the current invention.

Furthermore, ganache fillings for macarons are often based on cream (KR20200021369, KR101855153) which limits the shelf life of the macarons or are based on vegetable oil (WO2020036551) which adversely affects the consistency of the filling.

In a preferred embodiment, the fat is butter and it is mixed at an average temperature between 28°C and 35°C.

In a preferred embodiment, the syrup mixture comprises a maximum of 40% m/m of the total weight of the ganache filling. Because of its hygroscopic nature, the syrup mixture makes it possible to bind water and thus prepare a ganache filling with such a water activity. The syrup mixture is also used as a sweetener and therefore strongly determines the organoleptic properties of the filling.

By mixing the sugar, the water and the glucose syrup into a syrup mixture at an average temperature between 40°C and 75°C at a speed preferably between 1300 and 1700 revolutions/minute (rev/min), such as for example 1500 rev/min, the sugar present is dissolved sufficiently quickly in the syrup mixture. The temperature of the syrup mixture is also crucial for determining the final temperature of the final filling. This is in fact preferably between 30°C and 33°C and is preferably 31.5°C. Preferably sucrose is used as sugar. In a preferred embodiment, the viscosity of the syrup mixture is between 500 cps and 140,000 cps, measured at 20°C, preferably with a Brookfield Digital Viscometer (spindle N3) and the syrup mixture preferably has a solid content of 70% m/m on average.

In a final step of the method, the fat is added and mixed. In a preferred embodiment, the fat comprises a maximum of 50% m/m of the total weight of the ganache filling. In a preferred embodiment, after addition, the fat is mixed for 1 to 3 minutes, preferably at a speed between 1300 and 1700 revolutions/minute (rev/min), such as 1500 rev/min. Such a duration and speed make it possible to optimally mix the fat, while optimizing energy consumption.

We distinguish solid, semi-solid and liquid fats. Preferably, the fat according to the present invention is butter. Butter belongs to the solid fats or semi-solid fats, which are easy to process at room temperature. Butter provides a creamy ganache filling. Butter as known to the skilled person is made from animal fats and not from vegetable fats or oils. The butter preferably has a minimum fat percentage of 80%. Cream is often used instead of butter in the preparation of a ganache filling. However, cream has a more limited shelf life than butter, which compromises the shelf life of the macaron. By using butter in the present method, a filling, and consequently a macaron, with an ideal consistency and shelf life is obtained.

Preferably, the butter is added and mixed at an average temperature of between 28°C and 35°C and at a speed of between 1300 and 1700 revolutions/minute (rev/min), such as 1500 rev/min. At this temperature and speed, the butter will melt and become fluid enough to be quickly and easily mixed into the syrup mixture. By facilitating the mixing in of the butter, the mixing procedure is shortened, which can reduce production costs.

Ganache is the term used in the confectionery industry for a phase-inverted (i.e., oil-in-water) chocolate preparation. Ganache has a smooth, glossy texture and appearance, and a chocolate flavor.

In an embodiment, additional ingredients are added to the syrup mixture, wherein the additional ingredients comprise at least chocolate and/or cocoa powder and wherein the additional ingredients and the syrup mixture are mixed for 1 to 3 minutes at a temperature between 37°C and 42°C, preferably at a speed between 1300 and 1700 revolutions/minute (rev/min), such as 1500 rev/min, before the fat is added. In a preferred embodiment, the chocolate and/or cocoa powder comprises at least 20% m/m of the total weight of the ganache filling.

By mixing the additional ingredients at such a temperature, speed and duration, they will be optimally mixed and energy consumption will be optimized. Moreover, at such a temperature, the chocolate present will not burn and will display the desired characteristics.

In an embodiment, the additional ingredients, in addition to chocolate and/or cocoa powders, are selected from, inter alia, dyes, coloring foodstuffs, concentrates, extracts, food acids and/or aromas. These additional ingredients offer the advantage that a specific taste and color can be obtained. In this way, the consumer can choose from different options according to their personal preference. In an embodiment, the additional ingredients comprise substances that promote mixing, such as an emulsifier.

The different mixing steps take place in a suitable mixing installation known in the art. In a preferred embodiment, this mixing installation is in a slightly tilted position in order to obtain an optimum mixing. The duration of the mixing steps are also important for determining the final temperature of the final filling. This is in fact preferably between 30°C and 33°C and is preferably 31.5°C. By shortening or extending certain mixing steps by a few seconds, the temperature of the final filling can be slightly adjusted. By lengthening or shortening this step, the friction of the knife of the mixing installation creates a slightly higher or lower temperature, depending on the lengthening or shortening of the time.

In a second aspect, the invention relates to a macaron composed of two shells and the aforementioned filling, each shell being characterized by a flat bottom and a convex top, the shells in the macaron being positioned such that the flat bottom of a first shell is proximal to the flat bottom of a second shell, the filling being placed between and contacting the flat bottoms of the two shells, wherein, after migration of moisture from the filling, the moisture content and the average water activity of the shells and the filling in the macaron are in equilibrium and migration no longer occurs, the average water activity of the macaron in equilibrium being between 0.60 and 0.75 or between 0.65 and 0.80. When the filling is a marzipan filling, the average water activity of the macaron will be in equilibrium between 0.6 and 0.75. When the filling is a ganache filling, the average water activity of the macaron will be in equilibrium between 0.65 and 0.8.

The water activity of the individual filling is higher than that of the individual shells. When the water activity inside composite products differs, this difference can be responsible for moisture migration in this product. Consequently, the moisture from the filling will migrate to the shells. The macaron according to the present invention has been obtained after the aforementioned moisture migration and is in equilibrium, wherein both the filling and the adjacent shells are characterized by an average water activity between 0.60 and 0.75 or between 0.65 and 0.80. When the filling is a marzipan filling, both the filling and the adjacent shells will be characterized by an average water activity between 0.6 and 0.75. When the filling is a ganache filling, both the filling and the adjacent shells will be characterized by an average water activity between 0.65 and 0.8.

Such water activity gives the macaron optimal organoleptic properties, whereby the filling has the desired texture and the shell on the one hand is sufficiently crispy, yet creamy. Due to the organoleptic requirements, the filling should not be too dry. However, it should not be too liquid either. If the filling has a too liquid texture, it will run out between the shells.

In addition, foodstuffs with a high moisture content run the risk of developing significant microbial growth (bacteria, yeasts or molds), rendering the product unsuitable for sale or consumption. Since the water activity of the macaron according to the present invention (with a marzipan filling) is lower than a similar macaron with a dairy-based filling (e.g. cream), the macaron according to the present invention can be stored at room temperature for a longer period before development of microbial growth occurs making the macaron unfit for consumption. The macaron of the present invention therefore exhibits the desired organoleptic properties, but is microbiologically stable.

In a preferred embodiment, the moisture content of the macaron in equilibrium is between 8% and 15%. The macaron with such a moisture content according to the present invention exhibits the desired organoleptic properties, but is microbiologically stable.

After placing the filling between the shells, moisture from the filling will migrate to the shells. In an embodiment, where the filling is a marzipan filling, the moisture content of the filling is 30% to 70% lower upon reaching equilibrium compared to the moisture content of the filling before placement in the macaron. In an embodiment, where the filling is a ganache filling, the moisture content of the filling is 40% to 70% lower upon reaching equilibrium compared to the moisture content of the filling before placement in the macaron. Such migration of the moisture ensures on the one hand a filling with the desired organoleptic properties and a shell with the desired organoleptic properties, whereby the filling has the desired texture and the shell on the one hand is sufficiently crispy, yet creamy.

In an embodiment, the moisture content of the shell is 100% to 300% higher upon reaching equilibrium as compared to the moisture content of the shell prior to placement of the filling in the macaron. This rise is necessary to give the shell a slightly creamy texture. With less migration of moisture from the filling and consequently a lower moisture content of the shell, the shell will dry out too much and become hard, resulting in an unpleasant mouthfeel. With a higher migration of moisture from the filling and consequently a higher moisture content of the shell, the shell will become soggy, which also creates an undesirable mouthfeel.

In an embodiment, the macaron has been cooled for at least 8 minutes in a cooling tunnel at a temperature below -35°C before being moved from the conveyor belt to a recipient. Due to this cooling step, the fats present in the filling will become less fluid and the filling will become somewhat firmer in texture, making it better able to bond both shells of the macaron. As a result, no unwanted displacement of the shells will occur when the macaron is moved.

In a preferred embodiment, the macarons have been stored at a temperature of maximum 10°C for a period of 2 to 5 days in order to effect moisture migration from the filling to the shell.

The inventors have discovered that macarons that have undergone such a storage step show an optimal moisture migration from the filling to the shells and therefore exhibit the desired organoleptic properties.

In order to obtain the desired organoleptic properties of the macaron, the filling is preferably smooth, in which no unwanted grain or air bubbles are present. In a preferred embodiment, the maximum diameter of any air bubbles present in the filling is a maximum of 3 mm, preferably a maximum of 2 mm.

The recognizability of the macaron is important for consumer purchasing behavior. Macarons that are even in shape are also more attractive to consumers and stimulate purchasing behavior. In a preferred embodiment, each shell has an average height of between 10 and 12 mm. In a preferred embodiment, the shell has a diameter of between 38 and 42 mm, preferably between 39 and 41 mm.

In a preferred embodiment, the filling is evenly distributed over the flat bottoms of the two shells, so that the thickness of the filling layer is the same everywhere and the migration proceeds evenly. In a preferred embodiment, the macaron has an average height between 23 mm and 27 mm. Such a ratio between the average height of the shell and the average height of the macaron ensures optimal migration of the moisture from the filling into the shells.

### EXAMPLES

### EXAMPLE 1:

For the preparation of a marzipan filling for macarons, in a first step sugar, water and glucose syrup are mixed into a syrup mixture at an average temperature between 30°C and 35°C. At this temperature, the sugar present is dissolved sufficiently quickly in the syrup mixture. In a next step, the vegetable fat is added and the whole is mixed into an intermediate mixture.

Afterwards, additional ingredients, such as chocolate galets, dyes, aromas, preservatives and emulsifiers are added to the intermediate mixture, wherein the additional ingredients and the intermediate mixture are mixed for 110 seconds at a speed of 1500 rev/min before marzipan is added. Such a duration and speed make it possible to optimally mix the intermediate mixture and the additional ingredients, while optimizing energy consumption. Marzipan is added in a next step. The marzipan is 50% m/m of the total weight of the marzipan filling. A dairy-based filling (e.g. cream) is often used in the production of a macaron. However, such fillings based on dairy products have a shorter shelf life than a filling based on marzipan. The use of a marzipan-based filling makes it possible to keep the macaron at room temperature for a longer period of time. The marzipan is mixed at an average temperature between 28°C and 30°C for 110 seconds at a speed of 1500 rev/min. Mixing the marzipan at such a temperature range, speed and such a duration ensures that the marzipan is sufficiently malleable and makes it possible to mix it optimally, while optimizing energy consumption. After the addition of marzipan, additional ingredients are added and the whole is mixed for 15 seconds at a temperature between 30°C and 33°C.

It is also important when producing the marzipan filling to adjust the amount of water to obtain a marzipan filling with an average moisture content of 15-30% (m/m) and an average water activity of 0.65 to 0.8. By adjusting the amount of water to obtain a marzipan filling with such a moisture content and such water activity, a filling with an optimal flow is obtained. This makes the filling easy to use and allows for it to be easily placed between the shells. Too high a flow would result in a filling running out between the shells, too low a flow would make it more difficult to apply between the shells. Moreover, this filling will show an optimal migration pattern when placed between the shells of a macaron.

### EXAMPLE 2:

For the preparation of a ganache filling for macarons, in a first step sugar, water and glucose syrup are mixed into a syrup mixture at an average temperature between 45°C and 70°C. At this temperature, the sugar present is dissolved sufficiently quickly in the syrup mixture. In a next step, the syrup mixture is mixed into a composition that comprises, among other things, chocolate, aromas and dyes. In a final step, butter is added and mixed at an average temperature between 28°C and 35°C. At this temperature, the butter will melt and become fluid enough to be mixed in smoothly and quickly. Cream is often used in the preparation of a ganache filling. However, cream has a more limited shelf life than butter, which compromises the shelf life of the macaron. By using butter, a filling, and therefore a macaron, is obtained with an ideal consistency and shelf life. It is also important when producing the ganache filling to adjust the amount of water to obtain a ganache filling with an average moisture content of 20-35% (m/m) and an average water activity of 0.75 to 1. By adjusting the amount of water to obtain a ganache filling with such a moisture content and such water activity, a filling with an optimal flow is obtained. This makes the filling easy to use and allows for it to be easily placed between the shells. Too high a flow would result in a filling running out between the shells, too low a flow would make it more difficult to apply between the shells. Moreover, this filling will show an optimal migration pattern when placed between the shells of a macaron.

## Claims

1. Method for producing a filling for macarons, the filling comprising at least a sugar, water, glucose syrup and a fat, wherein in a first step the sugar, water and glucose syrup are mixed into a syrup mixture, **characterized in, that** the amount of water is adjusted to produce a filling with an average moisture content of 20-35% (m/m) and an average water activity of 0.75 to 1 for a ganache filling or with an average moisture content of 15-30% (m/m) and an average water activity of 0.65 to 0.80 for a marzipan filling.

2. Method according to claim 1 for producing a marzipan filling for macarons, the marzipan filling comprising at least a sugar, water, glucose syrup, a fat and marzipan, wherein the sugar, water and glucose syrup are mixed into a syrup mixture at an average temperature between 20°C and 40°C, wherein the fat is then added and the whole is mixed to an intermediate mixture, marzipan being subsequently added to the intermediate mixture, **characterized in, that** the amount of water is adjusted to obtain a filling with an average moisture content of 15-30% (m/m) and an average water activity of 0.65 to 0.8.

3. Method according to claim 2, wherein the addition of marzipan takes place at an average temperature between 28°C and 35°C.

4. Method according to any of the preceding claims 2-3, wherein after the addition of marzipan, concentrates, pastes and/or chocolates are added and the whole is then mixed for 10 to 20 seconds at a temperature between 30°C and 33°C.

5. Method according to claim 1 for producing a ganache filling for macarons, the ganache filling comprising at least a sugar, water, glucose syrup and a fat, wherein in a first step the sugar, water and glucose syrup are mixed into a syrup mixture at an average temperature between 40°C and 75°C and wherein the fat is added and mixed in a final step, **characterized in, that** the amount of water is adjusted to obtain a ganache filling with an average moisture content of 20-35% (m/m) and an average water activity of 0.75 to 1.

6. Method according to claim 5, the fat being butter, wherein it is mixed at an average temperature of between 28°C and 35°C.

7. A macaron composed of two shells and a filling according to any of the preceding claims 1-6, each shell being **characterized by** a flat bottom and a convex top, the shells in the macaron being positioned such that the flat bottom of a first shell is proximal to the flat bottom of a second shell, the filling being placed between and contacting the flat bottoms of the two shells, wherein, after migration of moisture from the filling, the moisture content and the average water activity of the shells and the filling in the macaron are in equilibrium and migration no longer occurs, the average water activity of the macaron in equilibrium being between 0.65 and 0.8 when the filling is a ganache filling or between 0.6 and 0.75 when the filling is a marzipan filling.

8. Macaron according to claim 7, wherein the moisture content of the macaron in equilibrium is between 8% and 15%.

9. Macaron according to any of the preceding claims 7-8, wherein the moisture content of the filling is 30% to 70% or 40% to 70% lower upon reaching equilibrium as compared to the moisture content of the filling before placement in the macaron.

10. Macaron according to any of the preceding claims 7-9, wherein the moisture content of the shell is 100% to 300% higher upon reaching equilibrium as compared to the moisture content of the shell prior to placement of the filling in the macaron.

11. Macaron according to any of the preceding claims 7-10, wherein the macaron, before being moved from the conveyor belt to a recipient, has been cooled for at least 8 minutes in a cooling tunnel at a temperature below -35°C.

12. Macaron according to any of the preceding claims 7-11, wherein the macarons have been stored for a period of 2 to 5 days at a temperature of maximum 10°C in order to effect moisture migration from the filling to the shell.

13. Macaron according to any of the preceding claims 7-12, wherein the maximum diameter of any air bubbles present in the filling is a maximum of 3 mm.

14. Macaron according to any of the preceding claims 7-13, each shell having an average height of between 10 and 12 mm.

15. Macaron according to any of the preceding claims 7-14, the macaron having an average height of between 23 mm and 27 mm.

## Patentansprüche

1. Verfahren zum Erzeugen einer Füllung für Macarons, wobei die Füllung mindestens einen Zucker, Wasser, Glukosesirup und ein Fett umfasst, wobei der Zucker, das Wasser und der Glukosesirup in einem ersten Schritt zu einer Sirupmischung gemischt werden, **dadurch gekennzeichnet, dass** die Menge des Wassers justiert wird, um eine Füllung mit einem durchschnittlichen Feuchtigkeitsgehalt von 20 bis 35 Masse-% und einer durchschnittlichen Wasseraktivität von 0,75 bis 1 für eine Ganache-Füllung oder mit einem durchschnittlichen Feuchtigkeitsgehalt von 15 bis 30 Masse-% und einer durchschnittlichen Wasseraktivität von 0,65 bis 0,80 für eine Marzipanfüllung zu erzeugen.

2. Verfahren nach Anspruch 1 zum Erzeugen einer Marzipanfüllung für Macarons, wobei die Marzipanfüllung mindestens einen Zucker, Wasser, Glukosesirup, ein Fett und Marzipan umfasst, wobei der Zucker, das Wasser und der Glukosesirup bei einer durchschnittlichen Temperatur zwischen 20°C und 40°C zu einer Sirupmischung gemischt werden, wobei das Fett dann zugesetzt und das Ganze zu einer Zwischenmischung gemischt wird, der Zwischenmischung anschließend das Marzipan zugesetzt wird, **dadurch gekennzeichnet, dass** die Menge des Wassers justiert wird, um eine Füllung mit einem durchschnittlichen Feuchtigkeitsgehalt von 15 bis 30 Masse-% und einer durchschnittlichen Wasseraktivität von 0,65 bis 0,8 zu erzielen.

3. Verfahren nach Anspruch 2, wobei das Zusetzen von Marzipan bei einer durchschnittlichen Temperatur zwischen 28°C und 35°C stattfindet.

4. Verfahren nach einem der vorhergehenden Ansprüche 2 bis 3, wobei nach dem Zusetzen von Marzipan Konzentrate, Pasten und/oder Schokoladen zugesetzt werden und das Ganze dann 10 bis 20 Sekunden lang bei einer Temperatur zwischen 30°C und 33°C gemischt wird.

5. Verfahren nach Anspruch 1 zum Erzeugen einer Ganache-Füllung für Macarons, wobei die Ganache-Füllung einen Zucker, Wasser, Glukosesirup und ein Fett umfasst, wobei der Zucker, das Wasser und der Glukosesirup in einem ersten Schritt bei einer durchschnittlichen Temperatur zwischen 40°C und 75°C zu einer Sirupmischung gemischt werden und wobei das Fett in einem letzten Schritt zugesetzt und eingemischt wird, **dadurch gekennzeichnet, dass** die Menge des Wassers justiert wird, um eine Ganache-Füllung mit einem durchschnittlichen Feuchtigkeitsgehalt von 20 bis 35 Masse-% und einer durchschnittlichen Wasseraktivität von 0,75 bis 1 zu erzielen.

6. Verfahren nach Anspruch 5, wobei das Fett Butter ist, wobei diese bei einer durchschnittlichen Temperatur zwischen 28°C und 35°C eingemischt wird.

7. Macaron, bestehend aus zwei Scheiben und einer Füllung nach einem der vorhergehenden Ansprüche 1 bis 6, wobei jede Scheibe durch einen ebenen Boden und eine konvexe Oberseite gekennzeichnet ist, wobei die Scheiben des Macarons derart positioniert werden, dass der ebene Boden einer ersten Scheibe nahe dem ebenen Boden einer zweiten Scheibe ist, wobei die Füllung zwischen den ebenen Böden der zwei Scheiben platziert und mit diesen in Kontakt gebracht wird, wobei nach der Migration von Feuchtigkeit aus der Füllung der Feuchtigkeitsgehalt und die durchschnittliche Wasseraktivität der Scheiben und der Füllung in dem Macaron im Gleichgewicht sind und keine Migration mehr auftritt, wobei die durchschnittliche Wasseraktivität des Macaron im Gleichgewicht zwischen 0,65 und 0,8 liegt, wenn die Füllung eine Ganache-Füllung ist, oder zwischen 0,6 und 0,75, wenn die Füllung eine Marzipanfüllung ist.

8. Macaron nach Anspruch 7, wobei der Feuchtigkeitsgehalt des Macarons im Gleichgewicht zwischen 8% und 15% liegt.

9. Macaron nach einem der vorhergehenden Ansprüche 7 bis 8, wobei der Feuchtigkeitsgehalt der Füllung nach dem Erreichen des Gleichgewichts 30% bis 70% oder 40% bis 70% niedriger ist als der Feuchtigkeitsgehalt in der Füllung vor dem Platzieren in dem Macaron.

10. Macaron nach einem der vorhergehenden Ansprüche 7 bis 9, wobei der Feuchtigkeitsgehalt der Scheibe nach dem Erreichen des Gleichgewichts 100% bis 300% höher ist als der Feuchtigkeitsgehalt der Scheibe vor dem Platzieren der Füllung in dem Macaron.

11. Macaron nach einem der vorhergehenden Ansprüche 7 bis 10, wobei das Macaron, bevor es von dem Förderband zu einem Abnehmer bewegt wird, mindestens 8 Minuten lang in einem Kühltunnel bei einer Temperatur unter - 35°C gekühlt wurde.

12. Macaron nach einem der vorhergehenden Ansprüche 7 bis 11, wobei die Macarons für eine Zeitspanne von 2 bis 5 Tagen bei einer Temperatur von maximal 10°C gelagert wurden, um die Migration von Feuchtigkeit von der Füllung in die Scheibe zu bewirken.

13. Macaron nach einem der vorhergehenden Ansprüche 7 bis 12, wobei der maximale Durchmesser etwaiger in der Füllung vorhandener Luftblasen maximal 3 mm beträgt.

14. Macaron nach einem der vorhergehenden Ansprüche 7 bis 13, wobei jede Scheibe eine durchschnittliche Höhe zwischen 10 und 12 mm aufweist.

15. Macaron nach einem der vorhergehenden Ansprüche 7 bis 14, wobei das Macaron eine durchschnittliche Höhe zwischen 23 mm und 27 mm aufweist.

## Revendications

1. Procédé de production d'un fourrage pour macarons, le fourrage comprenant au moins un sucre, de l'eau, du sirop de glucose et une graisse, dans lequel dans une première étape le sucre, l'eau et le sirop de glucose sont mélangés dans un mélange de sirop, **caractérisé en ce que** la quantité d'eau est ajustée pour produire un fourrage ayant une teneur moyenne en humidité de 20 à 35% (m/m) et une activité moyenne de l'eau de 0,75 à 1 pour un fourrage de ganache ou ayant une teneur moyenne en humidité de 15 à 30% (m/m) et une activité moyenne de l'eau de 0,65 à 0,80 pour un fourrage de pâte d'amandes.

2. Procédé selon la revendication 1 pour la production d'un fourrage de pâte d'amandes pour macarons, le fourrage de pâte d'amandes comprenant au moins un sucre, de l'eau, du sirop de glucose, une graisse et de la pâte d'amandes, dans lequel le sucre, l'eau et le sirop de glucose sont mélangés dans un mélange de sirop à une température moyenne entre 20°C et 40°C, dans lequel la graisse est alors ajoutée et l'ensemble est mélangé dans un mélange intermédiaire, la pâte d'amandes étant ensuite ajoutée au mélange intermédiaire, **caractérisé en ce que** la quantité d'eau est ajustée pour obtenir un fourrage ayant une teneur moyenne en humidité de 15 à 30% (m/m) et une activité moyenne de l'eau de 0,65 à 0,8.

3. Procédé selon la revendication 2, dans lequel l'ajout de pâte d'amandes a lieu à une température moyenne entre 28°C et 35°C.

4. Procédé selon l'une quelconque des revendications précédentes 2 à 3, dans lequel après l'ajout de pâte d'amandes, des concentrés, des pâtes et/ou des chocolats sont ajoutés et l'ensemble est alors mélangé pendant 10 à 20 secondes à une température entre 30°C et 33°C.

5. Procédé selon la revendication 1 pour la production d'un fourrage de ganache pour macarons, le fourrage de ganache comprenant au moins un sucre, de l'eau, du sirop de glucose et une graisse, dans lequel dans une première étape le sucre, l'eau et le sirop de glucose sont mélangés dans un mélange de sirop à une température moyenne entre 40°C et 75°C et dans lequel la graisse est ajoutée et mélangée dans une étape finale, **caractérisé en ce que** la quantité d'eau est ajustée pour obtenir un fourrage de ganache ayant une teneur moyenne en humidité de 20 à 35% (m/m) et une activité moyenne de l'eau de 0,75 à 1.

6. Procédé selon la revendication 5, la graisse étant du beurre, dans lequel il est mélangé à une température moyenne entre 28°C et 35°C.

7. Macaron composé de deux coques et d'un fourrage selon l'une quelconque des revendications précédentes 1 à 6, chaque coque étant **caractérisée par** une base plate et une partie supérieure convexe, les coques dans le macaron étant positionnées de telle manière que la base plate d'une première coque est à proximité de la base plate d'une seconde coque, le fourrage étant placé entre et en contact avec les bases plates des deux coques, dans lequel, après migration de l'humidité depuis le fourrage, la teneur en humidité et l'activité moyenne de l'eau des coques et du fourrage dans le macaron sont en équilibre et la migration ne se produit plus, l'activité moyenne de l'eau du macaron en équilibre étant entre 0,65 et 0,8 lorsque le fourrage est un fourrage de ganache ou entre 0,6 et 0,75 lorsque le fourrage est un fourrage de pâte d'amandes.

8. Macaron selon la revendication 7, dans lequel la teneur en humidité du macaron en équilibre est entre 8% et 15%.

9. Macaron selon l'une quelconque des revendications précédentes 7 à 8, dans lequel la teneur en humidité du fourrage est de 30% à 70% ou de 40% à 70% inférieure lorsque l'équilibre est atteint comparativement à la teneur en humidité du fourrage avant la mise en place dans le macaron.

10. Macaron selon l'une quelconque des revendications précédentes 7 à 9, dans lequel la teneur en humidité de la coque est de 100% à 300% supérieure lorsque l'équilibre est atteint comparativement à la teneur en humidité de la coque avant la mise en place du fourrage dans le macaron.

11. Macaron selon l'une quelconque des revendications précédentes 7 à 10, dans lequel le macaron, avant d'être déplacé de la bande transporteuse à un récipient, a été refroidi pendant au moins 8 minutes dans un tunnel de refroidissement à une température inférieure à -35°C.

12. Macaron selon l'une quelconque des revendications précédentes 7 à 11, dans lequel les macarons ont été stockés pendant une période de 2 à 5 jours à une température maximale de 10°C afin d'effectuer la migration de l'humidité du fourrage à la coque.

13. Macaron selon l'une quelconque des revendications précédentes7 à 12, dans lequel le diamètre maximal de toute bulle d'air présente dans le fourrage est au maximum de 3 mm.

14. Macaron selon l'une quelconque des revendications précédentes 7 à 13, chaque coque présentant une hauteur moyenne entre 10 et 12 mm.

15. Macaron selon l'une quelconque des revendications précédentes 7 à 14, le macaron présentant une hauteur moyenne entre 23 mm et 27 mm.
